(19)

Europäisches
Patentamt
European
Patent Office
Office européen
des brevets

(11) **EP 2 787 713 A1**

(12) **EUROPEAN PATENT APPLICATION**
published in accordance with Art. 153(4) EPC

(43) Date of publication:
**08.10.2014 Bulletin 2014/41**

(51) Int Cl.:
***H04L 29/10*** (2006.01)      ***H04L 1/00*** (2006.01)

(21) Application number: **12854306.3**

(86) International application number:
**PCT/JP2012/080656**

(22) Date of filing: **27.11.2012**

(87) International publication number:
**WO 2013/080983 (06.06.2013 Gazette 2013/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2011 JP 2011259607**

(71) Applicant: **Kyocera Corporation
Kyoto-shi, Kyoto 612-8501 (JP)**

(72) Inventor: **JOKO, Shingo
Kyoto-shi
Kyoto 612-8501 (JP)**

(74) Representative: **Schwabe - Sandmair - Marx
Patentanwälte
Stuntzstraße 16
81677 München (DE)**

(54) **ENERGY CONTROLLER, ENERGY CONTROL SYSTEM AND ENERGY CONTROL METHOD**

(57)     An HEMS 200 includes information indicating a process that equipment performs in a higher layer in lower layer processing information that is to be transmitted to the equipment. The HEMS 200 determines a timeout period in which the equipment should complete the process performed in the higher layer, in accordance with the information included in the lower layer processing information.

FIG. 2

**Description**

**Technical Field**

The present invention relates to a power control apparatus controlling equipment, a power control system, and a power control method.

**Background Art**

In recent years, it is known a power control apparatus that controls equipment such as a load provided in a consumer and a distributed power supply, and performs an optimum energy management (for example, Patent Literature 1) . Among such power control apparatuses, which intended for a house is called an HEMS (Home Energy Management System).

Further, it is becoming increasingly well known a case that applies a radio communication using a communication system prescribed by ZigBee (registered trademark) to a communication between a power control apparatus and equipment provided in a consumer.

**Citation List**

**Patent Literature**

Patent Literature 1: Japanese Patent Application Publication No. 2011-129085

**Summary of Invention**

In a radio communication, since an occurrence of a communication error cannot be avoided, it is necessary that a power control apparatus determines a timeout period for managing whether a process instructed to equipment is completed or not.

However, a time until equipment completes all processes instructed is different according to the number of the processes instructed or the time spent for each of the processes. Accordingly, when a power control apparatus determines the same timeout period for each equipment, it is impossible to properly manage whether all processes instructed to the equipment are completed or not in some cases.

Therefore, the present invention is to solve the problem described above and to provide a power control apparatus properly controlling equipment, a power control system, and a power control method, by properly determining a timeout period.

A power control apparatus according to a first feature controls equipment connected through a radio communication. The power control apparatus comprises a control unit that includes information indicating a process that the equipment performs in a higher layer in lower layer processing information that is to be transmitted to the equipment. The control unit determines a timeout period in which the equipment should complete the process, in accordance with the information included in the lower layer processing information.

In the first feature, the lower layer processing information includes one or a plurality of attribute information indicating an attribute of the process, and the control unit determines the timeout period in accordance with the number of the attribute information.

In the first feature, when the lower layer processing information includes one of the attribute information, the control unit determines the timeout period in accordance with an attribute-based processing period in which the equipment should complete the process indicated by the attribute information.

In the first feature, the process is a setting instruction for instructing the equipment to change setting or a notification instruction for instructing the equipment to notify a setting state, and the control unit determines the timeout period in accordance with the lower layer processing information that is setting instruction information indicating the setting instruction or notification instruction information indicating the notification instruction.

In the first feature, the control unit generates a plurality of the lower layer processing information, and the control unit determines the timeout period in accordance with the number of the lower layer processing information.

In the first feature, the control unit transmits the lower layer processing information to the equipment through one or a plurality of relay apparatuses, and the control unit determines the timeout period in accordance with the number of the relay apparatuses.

In the first feature, the control unit determines the timeout period in accordance with an unique response period to the equipment.

In the first feature, the lower layer processing information is compliant with ZigBee (registered trademark) and IEEE 802. 15. 4.

A power control system according to a second feature comprises equipment provided in a consumer and a power control apparatus connected to the equipment through a radio communication. The power control apparatus comprises a control unit that includes information indicating a process that the equipment performs in a higher layer in lower layer processing information that is to be transmitted to the equipment. The control unit determines a timeout period in which the equipment should complete the process, in accordance with the information included in the lower layer processing information.

A power control method according to a third feature is a power control method in a power control apparatus that controls equipment connected through a radio communication. The power control method comprises a step A of including information indicating a process that the equipment performs in a higher layer in lower layer processing information that is to be transmitted to the equipment, and a step B of determining a timeout period in which the equipment should complete the process, in accordance with the information included in the lower layer processing information.

According to the present invention, it is possible to provide a power control apparatus properly controlling equipment, a power control system, and a power control method, by properly setting a timeout period.

**Brief Description of Drawings**

[Fig. 1] Fig. 1 is a diagram indicating a power control system according to the first embodiment.
[Fig. 2] Fig. 2 is a block diagram indicating an HEMS according to the first embodiment.
[Fig. 3] Fig. 3 (a) is a diagram indicating information stored in a storage unit according to the first embodiment. Fig. 3 (b) is a diagram indicating information stored in the storage unit according to the first embodiment.
[Fig. 4] Fig. 4 (a) is a conceptual configuration diagram of a higher layer and a lower layer according to the first embodiment. Fig. 4 (b) is a diagram indicating a data configuration of lower layer processing information generated based on higher layer processing information.
[Fig. 5] Fig. 5 is a flow chart indicating a power control method according to the first embodiment.
[Fig. 6] Fig. 6 (a) is a sequence diagram indicating a power control method according to the first embodiment. Fig. 6 (b) is a sequence diagram indicating a power control method according to the first embodiment.
[Fig. 7] Fig. 7 is a sequence diagram indicating a power control method according to a modification.

**Description of the Embodiment**

Hereinafter, the embodiment of the present invention will be described with reference to the accompanying drawings. In the descriptions of the drawings below, the same or similar reference signs are assigned to the same or similar portions. However, it must be noted that the drawings are schematic, and the ratio of each dimension and the like are different from the real ones. Accordingly, specific dimensions and the like are should be determined by taking the following descriptions into consideration. Further, among the drawings, portions that the relationships or the ratios of the dimensions are different from each other are included.

[First Embodiment]

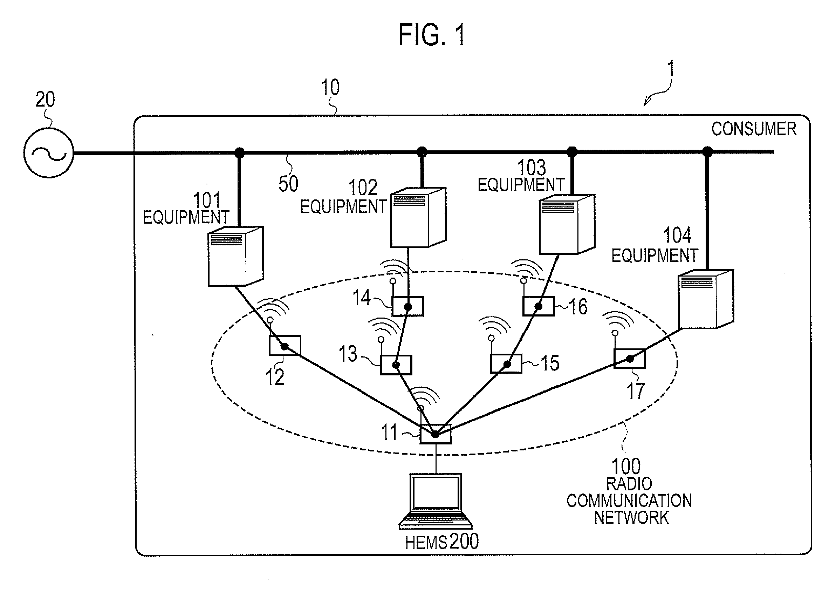

A power control system according to a first embodiment will be described. Fig. 1 is a diagram indicating a power control system 1 according to the first embodiment.

As indicated in Fig. 1, the power control system 1 is provided in a consumer 10. In the present embodiment, the consumer 10 is assumed to be a house and the like. The power control system 1 performs a power control in the consumer 10 that is connected to a power grid 20. The power control system 1 comprises a plurality of equipment 101 to 104 and an HEMS 200 that connects to the plurality of equipment 101 to 104 through a radio communication network 100.

The plurality of equipment 101 to 104 perform various processes in accordance with an instruction from the HEMS 200. The plurality of equipment 101 to 104 are assumed to be loads provided in the consumer 10, sensors, and distributed power supplies. Other equipment such as distribution boards may also be included in the plurality of equipment 101 to 104.

The load is an apparatus that consumes a power provided through a power line 50. For example, the load includes an apparatus such as a refrigerator, a lighting, an air conditioner, and a television. The load may be a singular apparatus and also may be a plurality of apparatuses.

The sensor may be, for example, a sensor for measuring temperature, or also may be a sensor for measuring a power consumption consumed in the consumer 10, a sensor for measuring a power provided from a distributed power supply, or a sensor for measuring a power that is a reverse power flow from a distributed power supply to the grid 20.

The distributed power supply is a power supply means for providing a power to equipment of the consumer 10. For example, as a distributed power supply, a fuel cell such as an SOFC (Solid Oxide Fuel Cell) or a PEFC (Polymer Electrolyte Fuel Cell), or a power generation apparatus using clean energy such as solar light, wind power and geothermal heat, or a storage battery for storing power or discharging can be considered. A battery for an electric vehicle may be included in a storage battery.

The HEMS 200 (HEMS: Home Energy Management System) is an example of a power control apparatus and is an apparatus for managing a power of the consumer 10. The HEMS 200 communicates with the equipment 101 to 104 through the radio communication network 100. The radio communication network 100 includes a plurality of relay apparatuses 11 to 17 and configures an ad hock network. The radio communication network 100 is not limited to the ad hoc network. The HEMS 200 communicates with the equipment 101 to 104 by a communication system compliant with ZigBee (registered trademark) and IEEE 802. 15. 4.

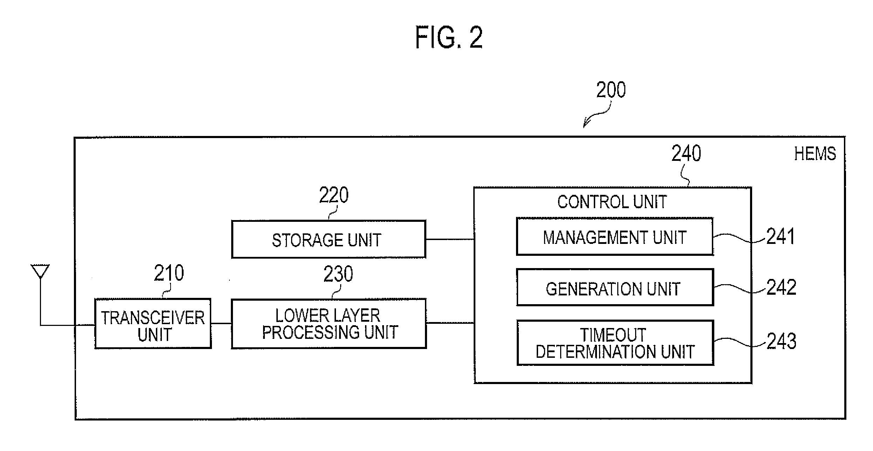

The HEMS 200 comprises, as indicated in Fig. 2, a transceiver unit 210, a storage unit 220, a lower layer processing unit 230, and a control unit 240.

The transceiver unit 210 communicates with the equipment 101 to 104 through the radio communication network 100.

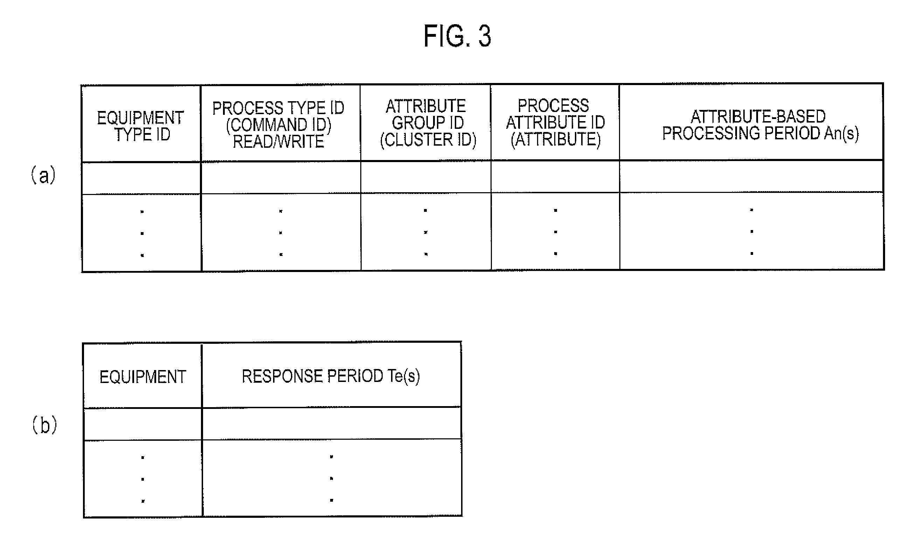

The storage unit 220 stores a program that the control unit 240 performs and is used as a work area during the performance of the program at the control unit 240. The storage unit 220 stores, as indicated in Fig. 3(a), various information of the equipment 101 to 104. The storage unit 220 associates and stores, for example, an equipment type ID corresponding to the equipment 101 to 104, a process type ID of processes performed by the equipment corresponding to each equipment type ID, an attribute group ID described later, a process attribute ID, and an attribute-based processing period An. The equipment 101 to 104 can notify the HEMS 200 of these information, for example, when the equipment starts to communicate with the HEMS 200 through the radio communication network 100.

The equipment type ID is, for example, "air conditioner" or "SOFC" , an identification information for identifying types of the equipment 101 to 104 provided in the consumer 10.

The process type ID is information corresponding to Command ID that is defined in ZigBee (registered trademark). Here, in a radio communication using a protocol prescribed by ZigBee (registered trademark), as Command, a "Read" command or a "Write" command can be instructed to equipment. The "Read" command is a notification instruction for instructing equipment to notify setting information, and the "Write" command is a setting instruction for instructing equipment to update setting information. The process type ID is information for identifying the types of these processes (instructions).

The attribute group ID is information corresponding to Cluster ID that is defined in ZigBee (registered trademark). The attribute group ID is, for example, "On/Off setting" or "air conditioner setting", information for specifying a process to be performed by equipment.

The process attribute ID is information corresponding to Attribute that is defined in ZigBee (registered trademark). The process attribute ID is information indicating a specific process corresponding to the attribute group ID. For example, when the attribute group ID is "On/Off setting", the process attribute ID includes "On/Off setting state" and indicates processes to be performed by equipment 101 to 104. Alternatively, when the attribute group ID is "air conditioner setting" , the process attribute ID includes such as "temperature setting" and indicates specific processes to be performed by the equipment 101 to 104.

The attribute-based processing period An is information indicating a period in which the equipment should complete a process indicated by the process type ID, when the process, which is specified by the equipment type ID, the attribute group ID, and the process attribute ID, is to be performed by the equipment. Specifically, the attribute-based processing period is, to one process attribute ID "On/Off setting state", an expected period in which the performance of the process indicated by the process type ID is to be completed by the equipment.

Furthermore, the storage unit 220 associates and stores, as indicated in Fig. 3 (b), the equipment 101 to 104 and a response period Te.

The response period Te is information indicating a period that is required for an unique response to the equipment when a process is to be performed by the equipment. For example, even when the same process is to be performed by the equipment of the same equipment type ID (for example, air conditioner), the period required for the process is different according to the equipment 101 to 104. The response period Te is an offset period for adjusting a response time difference different by each of the plurality of equipment 101 to 104. The response period Te may be a value that the HEMS 200 grasps in advance, and also may be a value that the HEMS 200 acquired from the equipment through a prior communication. These information stored by the storage unit 220 are referenced by a timeout determination unit 243 of the control unit 240, which will be described later.

The lower layer processing unit 230 converts information inputted from the control unit 240 which is a higher layer to a format that can be performed in a lower layer, and transmits it to the plurality of equipment 101 to 104 through the transceiver unit 210. The lower layer processing unit 230 converts information received from the plurality of equipment 101 to 104 through the transceiver unit 210 to a format that can be performed in a higher layer, and outputs it to the control unit 240. The lower layer processing unit 230 converts the information to a format that is compliant with ZigBee (registered trademark) and IEEE 802.15.4. In the present embodiment, a communication module compliant with ZigBee (registered trademark) and IEEE 802.15.4 is configured by the transceiver unit 210 and the lower layer processing unit 230.

The control unit 240 is configured by using CPU, storage, and the like. The control unit 240 controls various functions of the power control system 1 according to an application performing in a higher layer. Specifically, the control unit 240 comprises a management unit 241, a generation unit 242 and a timeout determination unit 243.

The management unit 241 manages a higher layer processing information indicating a process that is to be performed by the equipment 101 to 104 in the higher layer. Here, the higher layer processing information is control information in a higher layer for instructing processes such as On/Off of a power supply, a power generation, charging and discharging, and an air condition switch, to the equipment. Since the higher layer processing information is different by functions that the equipment 101 to 104 have, it is possible to prescribe other various information without being limited by this. The management unit 241 outputs the higher layer processing information to the generation unit 242 when the processes corresponding to the higher layer processing information are to be performed by the equipment 101 to 104.

The management unit 241 also has a retransmitting function for retransmitting lower layer processing information described later from the lower layer processing unit 230 to the equipment, so that the process corresponding to the higher layer processing information is to be performed again by the equipment, when the response information indicating that the process is completed is not received, within a timeout period described later, from the equipment 101 to 104 that are instructed required processes.

The generation unit 242 generates the lower layer processing information based on the higher layer processing information. The lower layer processing information is either one of the following types: setting instruction information "Write" indicating a "Write" command for instructing the equipment 101 to 104 to change setting, or notification instruction information "Read" indicating a "Read" command for instructing the equipment 101 to 104 to notify setting states. That is, the generation unit 242 generates the lower layer processing information that includes the setting instruction information "Write" or the notification instruction information "Read", as a process type ID. Also, the lower layer processing information includes one attribute group ID and one or a plurality of process attribute IDs. In other words, the attribute group ID is a unit for generating the lower layer processing information. Further, the process attribute ID is a unit of a process that the equipment performs.

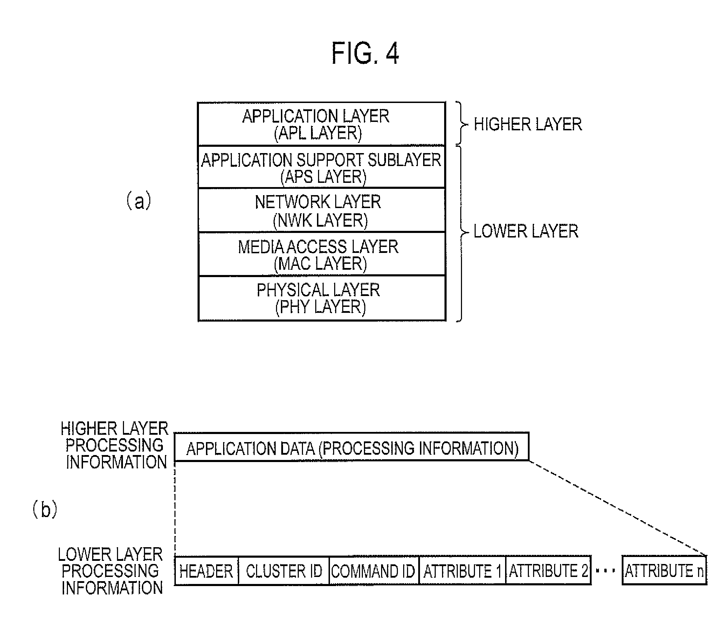

Here, in Fig. 4 (a), a conceptual configuration diagram of a higher layer and a lower layer in the present embodiment is indicated, and in Fig. 4(b), a data configuration of lower layer processing information generated based on higher layer processing information is indicated. As indicated in Fig. 4 (a), in the present embodiment, a function of the control unit 240 operates in a higher layer which is an APL layer, and a function of the lower layer processing unit 230 operates in a lower layer which is an APS layer, an NWK layer, an MAC layer, and a PHY layer.

Further, the generation unit 242 generates the lower layer processing information based on an HA (Home Automation) profile prescribed by ZigBee (registered trademark). Specifically, as indicated in Fig. 4 (b), in a payload for the APS layer, the generation unit 242 generates the lower layer processing information including Cluster ID (attribute group ID), Command ID (process type ID), and Attribute 1 ... n (process attribute ID), based on the higher layer processing information. The Cluster ID, the Command ID, and the Attribute 1 ... n are information compliant with ZCL (ZigBee Cluster Library). Further, the generation unit 242 may include the information for identifying the equipment performing processes and the corresponding equipment type IDs to, for example, the "Header" of the lower layer processing information indicated in Fig. 4 (b).

The generation unit 242 outputs the lower layer processing information to the lower layer processing unit 230. The lower layer processing information is transmitted to the equipment 101 to 104 through the transceiver unit 210 according to a communication system prescribed by ZigBee (registered trademark). Further, the generation unit 242 notifies the timeout determination unit 243 of the generated lower layer processing information.

The timeout determination unit 243 determines a timeout period in which the equipment 101 to 104 should complete the processes indicated by the higher layer processing information. The timeout determination unit 243 can use, for example, the number N of process attribute IDs (Attribute) included in the lower layer processing information as information (hereinafter, timeout period determination information) for determining a timeout period t. Also, the timeout determination unit 243 can use the attribute-based processing period An corresponding to the information included in the lower layer processing information as the timeout period determination information. Further, the timeout determination unit 243 can use the process type ID (Command ID) included in the lower layer processing information, which is the setting instruction information (the "Write" command) or the notification instruction information (the "Read" command), as the timeout period determination information. Also, the timeout determination unit 243 can use the unique response period Te of the equipment as the timeout period determination information.

Specifically, the timeout determination unit 243 specifies equipment type ID, Cluster ID (attribute group ID), Command ID (process type ID), and Attribute 1 ... n (process attribute ID), by referring to the lower layer processing information. Further, the timeout determination unit 243 specifies the number N of process attribute IDs included in the lower layer processing information. Further, the timeout determination unit 243 specifies the attribute-based processing period An and the unique response period Te of the equipment by referring to the storage unit 220.

The timeout determination unit 243 calculates the timeout period t based on these information. In the following mathematical formula 1, the number of the process attribute IDs (Attribute) is indicated as N.

[Math. 1]

$$t = Te + \sum_{n=1}^{N} An$$

... ... ... ... mathematical formula 1

(Energy control method)

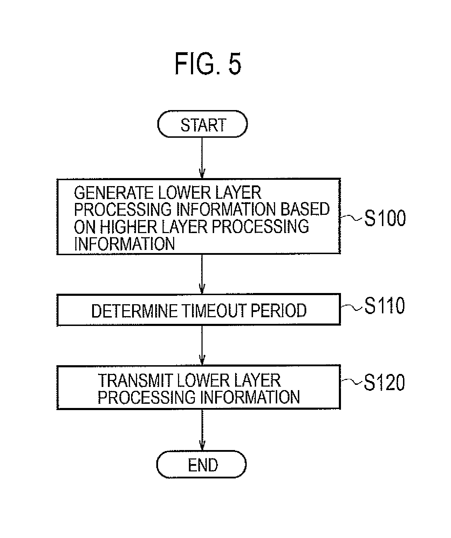

Hereinafter, a power control method according to the first embodiment will be described. Fig. 5 is a flow chart indicating the power control method according to the first embodiment. Specifically, Fig. 5 indicates an operation of the HEMS 200 according to the present embodiment when instructing the predetermined process to the equipment (for example, 101).

In step S100, the management unit 241 determines the higher layer processing information that the management unit 241 instructs the equipment 101 to perform the process. The generation unit 242 generates the lower layer processing information including equipment type ID, Cluster ID (attribute group ID), Command ID (process type ID), and Attribute 1 ... n (process attribute ID), based on the higher layer processing information. The generation unit 242 outputs the lower layer processing information to the timeout determination unit 243 and the lower layer processing unit 230.

In step S110, the timeout determination unit 243 specifies equipment type ID, Cluster ID (attribute group ID), Command ID (process type ID) and Attribute 1 ... n (process attribute ID) by referring to the lower layer processing information. Further, the timeout determination unit 243 specifies the attribute-based processing period An corresponding to the specified information and the unique response period Te of the equipment, by referring to the storage unit 220. The timeout determination unit 243 substitutes the attribute-based processing period An and the response period Te in the mathematical formula 1 described above and calculates the timeout period t. The timeout determination unit 243 notifies the management unit 240 of the calculated timeout period t.

In step S120, the lower layer processing unit 230 converts the lower layer processing information inputted from the generation unit 242 which is a higher layer to a format that is to be performed in a lower layer, and transmits it to the equipment 101 through the transceiver unit 210.

Thereafter, the management unit 241 determines whether the process indicated by the higher layer is completed by the equipment 101 within the timeout period t or not. Specifically, the management unit 241 performs the determination according to whether the response information indicating the completion of the process within the timeout period t is received from the equipment 101 or not. The management unit 241 makes the lower layer processing unit 230 to retransmit the lower layer processing information to the equipment 101 when the response information is not received within the timeout period t.

In the HEMS 200 according to the present embodiment, the timeout determination unit 243 determines the timeout period t in which the equipment (for example, 101) should complete the process of the higher layer by using the information included in the lower layer processing information as the timeout period determination information.

Specifically, the timeout determination unit 243 determines the timeout period t based on the number N of process attribute IDs included in the lower layer processing information, the attribute-based processing period An, the process type ID (Command ID), and the unique response period Te of the equipment.

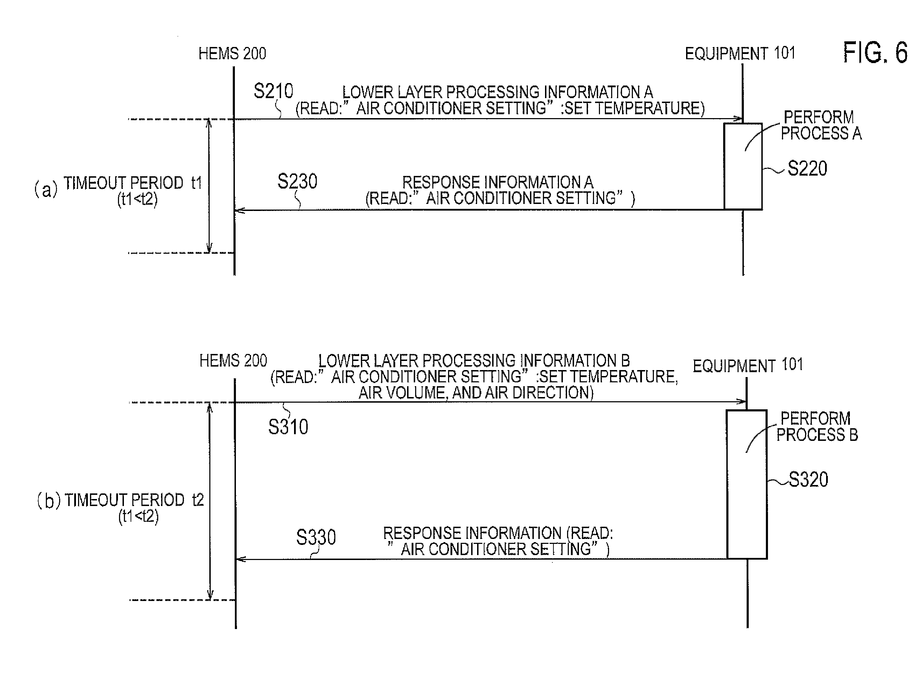

Here, in Fig. 6 (a), a sequence diagram indicating a communication between the HEMS 200 and the equipment 101 (for example, an air conditioner) when the timeout determination unit 243 determines a timeout period t1 is indicated, and in Fig. 6(b), a sequence diagram indicating a communication between the HEMS 200 and the equipment 101 (for example, an air conditioner) when the timeout determination unit 243 determines a timeout period t2 is indicated.

As indicated in Fig. 6 (a), in step S210, the HEMS 200 transmits, to the equipment 101, lower layer processing information A in which a process type ID (Command ID) "Read", an attribute group ID (Cluster ID) "air conditioner setting", and a process attribute ID1 "temperature setting" are included. In step S220, the equipment 101 performs a process A based on the process type ID (Command ID) "Read", the attribute group ID (Cluster ID) "air conditioner setting", and the process attribute ID1 "temperature setting", which are included in the lower layer processing information A. In step S230, the equipment 101 transmits a response information A indicating the completion of the process at a timing that the process A is completed.

In the case described above, the timeout determination unit 243 determines the timeout period t1 based on the process type ID (Command ID) "Read", the attribute group ID (Cluster ID) "air conditioner setting", and the process attribute ID1 "temperature setting".

On the other hand, as indicated in Fig. 6(b), in step S310, the HEMS 200 transmits, to the equipment 101, lower layer processing information B in which a process type ID (Command ID) "Read" , an attribute group ID (Cluster ID) "air conditioner" , and a process attribute ID1 (temperature setting), ID2 (air volume setting), and ID3 (air direction setting) are included. In step S320, the equipment 101 performs a process B based on the process type ID (Command ID) "Read", the attribute group ID (cluster ID) "air conditioner setting", and the process attribute ID1 (temperature setting), ID2 (air volume setting), and ID3 (air direction setting), which are included in the lower layer processing information B. In the equipment 101, the period until the process B, in which the type and the number of the process attribute IDs are large, is completed is longer than the period until the process A is completed. In step S330, the equipment 101 transmits a response information B indicating the completion of the process at a timing that the process B is completed.

In the case described above, the timeout determination unit 243 determines the timeout period t2 based on the process type ID (Command ID) "Read", the attribute group ID (Cluster ID) "air conditioner setting", the process attribute ID1 (temperature setting), ID2 (air volume setting), and ID3 (air direction setting), which are included in the lower layer processing information B.

Here, the timeout period t1 and the timeout period t2 satisfy the relationship of t1<t2. In this way, the HEMS 200 determines the timeout period t by taking the period in which the process is actually to be performed by the equipment 101 into consideration, wherein the process corresponds to the process attribute ID included in the lower layer processing information that is generated based on the higher layer processing information. That is, since the HEMS 200 determines the timeout period t corresponding to the higher layer processing information based on the information (for example, the type and the number of the process attribute IDs) included in the lower layer processing information that is actually to be processed by the equipment 101, the HEMS 200 can more accurately grasp whether the equipment operates normally in accordance with the instruction or not, and can properly control the equipment 101.

[First Modification]

Hereinafter, a first modification according to the first embodiment will be described. As below, the differences from the first embodiment will be mainly described.

The generation unit 242 according to the present modification generates a plurality of lower layer processing information based on higher layer processing information. Further, the timeout determination unit 243 determines a timeout period t in accordance with the number of the plurality of lower layer processing information.

Specifically, when the plurality of lower layer processing information A and B are inputted from the generation unit 242, the timeout determination unit 243 specifies the equipment type ID, Cluster ID (the attribute group ID), Command ID (the process type ID), and Attribute 1 ... n (the process attribute ID) by referring to each of the lower layer processing information A and B. Further, the timeout determination unit 243 specifies the attribute-based processing period An corresponding to the specific information and the unique response period Te of the equipment, by referring to the storage unit 220.

The timeout determination unit 243 calculates a timeout period t4 according to the following mathematical formula 2, based on the information specified by referring to the lower layer processing information A and B, and the information specified by referring to the storage unit 220.

In the below mathematical formula 2, the unique response period of the equipment is indicated as "Te" , the number of the lower layer processing information is indicated as "Nc" (here, A and B), the unique timeout period in the lower layer processing information A and B as "Cm", the number of Attribute 1 ... n (the process attribute IDs) is indicated as "Nm", and the attribute-based processing period of each Attribute 1 ... n (process attribute ID) included in the lower layer processing information A and B is indicated as "Amn".

Here, the unique additional period "Cm" in the lower layer processing information A and B is a period that occurs as a communication frequency increases according to a transmission of the plurality of lower layer processing information A and B to the equipment. In the first embodiment wherein merely one lower layer processing information is transmitted, an additional period according to this communication is included in the unique response period "Te" of the equipment.

[Math. 2]

$$t4 = Te + \sum_{m=1}^{Nc} \left( Cm + \sum_{n=1}^{Nm} Amn \right)$$

... ... ... ... mathematical formula 2

# EP 2 787 713 A1

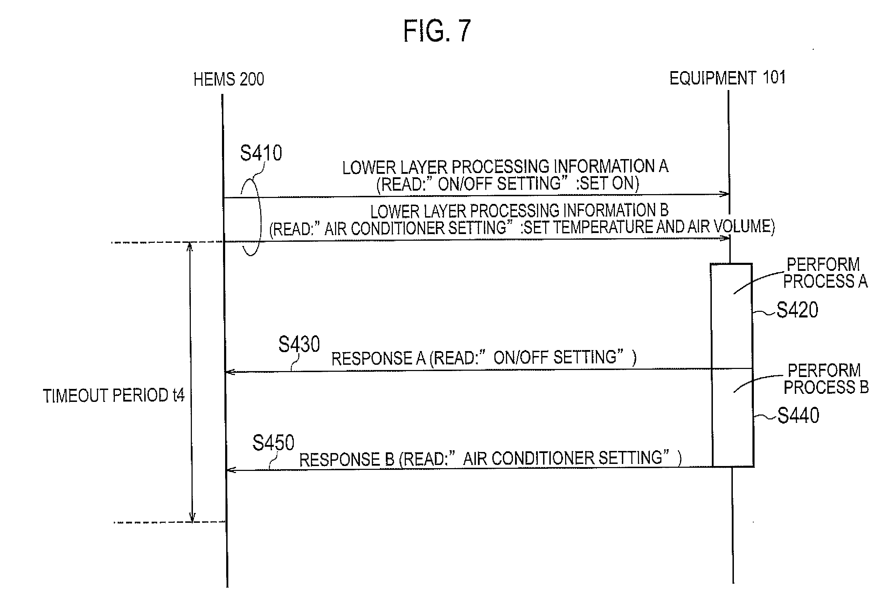

Further, a power control method according to the present modification will be described by referring to Fig. 7. In Fig. 7, a sequence diagram of the power control method according to the present modification is indicated.

In step S410, in the HEMS 200, the generation unit 242 generates the lower layer processing information A and B based on the higher layer processing information. Specifically, the generation unit 242 generates the lower layer processing information A and the lower layer processing information B, wherein the lower layer processing information A includes the equipment type ID, the process type ID "Read", the attribute group ID (Cluster ID) "On/Off setting", and the process attribute ID (for example, On/Off setting state), and the lower layer processing information B includes the equipment type ID, the process type ID "Read", the attribute group ID (Cluster ID) "air conditioner setting", and the process attribute ID (temperature setting and air volume setting).

At this time, the timeout determination unit 243 specifies the attribute-based processing period Amn by referring to the storage unit 220, based on the equipment type ID, the process type ID "Read", the attribute group ID (Cluster ID) "On/Off setting", and the process attribute ID (for example, On/Off setting state), which are included in the lower layer processing information A. Subsequently, the timeout determination unit 243 specifies the attribute-based processing period Amn by referring to the storage unit 220, based on the equipment type ID, the process type ID "Read", the attribute group ID (Cluster ID) "air conditioner setting", and the process attribute ID (temperature setting and air volume setting), which are included in the lower layer processing information B. Also, the timeout determination unit 243 specifies the unique response period Te of the equipment by referring to the storage unit 220.

The timeout determination unit 243 substitutes the specified plurality of attribute-based processing period Amn and the response period Te in the mathematical formula 2 described above and calculates the timeout period t4.

Further, the transceiver unit 210 transmits, to the equipment 101, the lower layer processing information A and B generated by the generation unit 242.

In step S420, the equipment 101 performs the process A based on the process type ID "Read", the attribute group ID (Cluster ID) "On/Off setting", and the process attribute ID (for example, On/Off setting state), which are included in the lower layer processing information A.

In step S430, the equipment 101 transmits the response information A indicating the completion of the process at the timing in which the process A is completed.

In step S440, the equipment 101 performs the process B based on the process type ID "Read", the attribute group ID (Cluster ID) "air conditioner setting", and the process attribute ID (temperature setting and air volume setting), which are included in the lower layer processing information B.

In step S450, the equipment 101 transmits the response information B indicating the completion of the process at the timing in which the process B is completed.

As described above, the HEMS 200 according to the present modification determines the timeout period t4 based on the information specified from the lower layer processing information A and B, and the information specified by referring to the storage unit 220. Accordingly, the HEMS 200 can more accurately grasp whether the equipment 101 normally operates in accordance with the instruction or not and can properly control the equipment 101.

[Second Modification]

Hereinafter, a second modification according to the first embodiment will be described. As below, the differences from the first embodiment will be mainly described.

The timeout determination unit 243 may determine the timeout period in accordance with the number of the relay apparatuses (the number of hops), when the lower layer processing information is transmitted to the equipment 101 to 104 through one or the plurality of relay apparatuses 11 to 17.

Specifically, the timeout period t may be determined according to the following mathematical formula 3 by taking the number Pn of hops into consideration. In the below mathematical formula 3, a timeout period per hop is indicated as "Pt".

[Math. 3]

$$t = (Pt \times Pn) + Te + \sum_{n=1}^{N} An \qquad \text{...  ...  ...  ... mathematical formula 3}$$

According to the HEMS 200 related to the present modification, since the timeout period t is determined by taking a passing time until the lower layer processing information arrives at the equipment 101 to 104 through the radio communication network 100 into consideration, a more accurate timeout period t can be determined.

[Other Embodiments]

The present invention has been described as the embodiments described above. However, it must not be understood that the discussions and the drawings that constitute a part of these disclosures limit the present invention. Various modifications, embodiments, and operation techniques will be apparent to those of ordinary skill in the art in viewing of these disclosures.

For example, in the embodiments described above, the attribute-based processing period An stored in the storage unit 220 is set in different values in accordance with the type of the process attribute ID (Attribute). However, the attribute-based processing period An may be constant regardless of the type of the process attribute ID (Attribute).

For example, in the lower layer processing information transmitted to the equipment 101 (for example, air conditioner), when the attribute group ID (Cluster ID) is "air conditioner setting" and the process attribute ID1 (for example, temperature setting) is included, the timeout period is "t5". On the other hand, in the lower layer processing information, when the attribute group ID (Cluster ID) is "air conditioner setting" and the process attribute ID1 (for example, temperature setting), ID2 (air volume setting), and ID3 (air direction setting) are included, the timeout period is "t6", and the timeout determination unit 243 may determine t5 and t6 so that the relationship of $t6 = t5 \times 3$ is satisfied.

In the embodiment, the timeout determination unit 243 has determined the timeout period t based on the number N of the process attribute IDs specified from the information included in the lower layer processing information, the attribute-based processing period An, the process type ID (Command ID), and the unique response time Te of the equipment stored in the storage unit 220. However, the timeout determination unit 243 may determine the timeout period t based on at least one of these information.

In the embodiment, a house is exemplified as a consumer and the HEMS 200 is exemplified as a power control apparatus. However, the power control apparatus may be, for example, a BEMS (Building and Energy Manegement System) that is intended for a building, an FEMS (Factory Energy Manegement System) intended for a factory, and also may be a CEMS (Community Energy Management System) intended for a community.

Thereby, the present invention includes various embodiments which are not described here. Furthermore, it is possible to combine the embodiments and the modifications described above. Accordingly, the technique scope of the present invention should be merely determined with reference to the matters used to specify the present invention according to the appropriate claims from the above description.

Note that the entire content of the Japanese patent Application No. 2011-259607 (filed on November 28, 2011) is incorporated herein by reference.

**Industrial Applicability**

According to the present invention, it is possible to provide a power control apparatus properly controlling equipment, a power control system, and a power control method by setting a timeout period properly.

**Claims**

1. A power control apparatus that controls equipment connected through a radio communication, comprising:

   a control unit that includes information indicating a process that the equipment performs in a higher layer in lower layer processing information that is to be transmitted to the equipment, wherein
   the control unit is configured to determine a timeout period in which the equipment should complete the process, in accordance with the information included in the lower layer processing information.

2. The power control apparatus according to claim 1, wherein
   the lower layer processing information includes one or a plurality of attribute information indicating an attribute of the process; and wherein
   the control unit is configured to determine the timeout period in accordance with the number of the attribute information.

3. The power control apparatus according to claim 2, wherein
   the control unit is configured to determine, when the lower layer processing information includes one of the attribute information, the timeout period in accordance with an attribute-based processing period in which the equipment should complete the process indicated by the attribute information.

4. The power control apparatus according to claim 1, wherein

the process is a setting instruction for instructing the equipment to change setting or a notification instruction for instructing the equipment to notify a setting state; and wherein
the control unit is configured to determine the timeout period in accordance with the lower layer processing information that is the setting instruction information indicating the setting instruction or the notification instruction information indicating the notification instruction.

5. The power control apparatus according to claim 1, wherein
the control unit is configured to generate a plurality of lower layer processing information; and wherein
the control unit is configured to determine the timeout period in accordance with the number of the lower layer processing information.

6. The power control apparatus according to claim 1, wherein
the control unit is configured to transmit the lower layer processing information to the equipment through one or a plurality of relay apparatuses; and wherein
the control unit is configured to determine the timeout period in accordance with the number of the replay apparatuses.

7. The power control apparatus according to claim 1, wherein
the control unit determines the timeout period in accordance with an unique response period to the equipment.

8. The power control apparatus according to claim 1, wherein
the lower layer processing information is compliant with ZigBee (registered trademark) and IEEE 802.15.4.

9. A power control system comprising:

equipment provided in a consumer and
a power control apparatus connected to the equipment through a radio communication, wherein
the power control apparatus comprises a control unit that includes information indicating a process that the equipment performs in a higher layer in lower layer processing information that is to be transmitted to the equipment, wherein
the control unit is configured to determine a timeout period in which the equipment should complete the process, in accordance with the information included in the lower layer processing information.

10. A power control method in a power control apparatus that controls equipment connected through a radio communication, comprising:

a step A of including information indicating a process that the equipment performs in a higher layer in lower layer processing information that is to be transmitted to the equipment; and
a step B of determining a timeout period in which the equipment should complete the process, in accordance with the information included in the lower layer processing information.

# FIG. 1

# FIG. 2

EP 2 787 713 A1

# FIG. 3

(a)

| EQUIPMENT TYPE ID | PROCESS TYPE ID (COMMAND ID) READ/WRITE | ATTRIBUTE GROUP ID (CLUSTER ID) | PROCESS ATTRIBUTE ID (ATTRIBUTE) | ATTRIBUTE-BASED PROCESSING PERIOD An(s) |
|---|---|---|---|---|
|  |  |  |  |  |
| . . . | . . . | . . . | . . . | . . . |

(b)

| EQUIPMENT | RESPONSE PERIOD Te(s) |
|---|---|
|  |  |
| . . . | . . . |

EP 2 787 713 A1

# FIG. 4

(a)

| APPLICATION LAYER (APL LAYER) | HIGHER LAYER |
|---|---|
| APPLICATION SUPPORT SUBLAYER (APS LAYER) | |
| NETWORK LAYER (NWK LAYER) | LOWER LAYER |
| MEDIA ACCESS LAYER (MAC LAYER) | |
| PHYSICAL LAYER (PHY LAYER) | |

(b)

HIGHER LAYER PROCESSING INFORMATION

APPLICATION DATA (PROCESSING INFORMATION)

LOWER LAYER PROCESSING INFORMATION

| HEADER | CLUSTER ID | COMMAND ID | ATTRIBUTE 1 | ATTRIBUTE 2 | · · · | ATTRIBUTE n |
|---|---|---|---|---|---|---|

EP 2 787 713 A1

# FIG. 5

START

GENERATE LOWER LAYER PROCESSING INFORMATION BASED ON HIGHER LAYER PROCESSING INFORMATION ∿S100

DETERMINE TIMEOUT PERIOD ∿S110

TRANSMIT LOWER LAYER PROCESSING INFORMATION ∿S120

END

FIG. 6

HEMS 200     EQUIPMENT 101

S210   LOWER LAYER PROCESSING INFORMATION A
(READ:" AIR CONDITIONER SETTING" :SET TEMPERATURE)

PERFORM PROCESS A

~S220

(a) TIMEOUT PERIOD t1
(t1<t2)

S230    RESPONSE INFORMATION A
(READ:" AIR CONDITIONER SETTING" )

HEMS 200   LOWER LAYER PROCESSING INFORMATION B
(READ:" AIR CONDITIONER SETTING" :SET TEMPERATURE,
AIR VOLUME, AND AIR DIRECTION)   EQUIPMENT 101

S310

PERFORM PROCESS B

~S320

(b) TIMEOUT PERIOD t2
(t1<t2)

S330   RESPONSE INFORMATION (READ:
" AIR CONDITIONER SETTING" )

EP 2 787 713 A1

# FIG. 7

HEMS 200                                                                                EQUIPMENT 101

S410
LOWER LAYER PROCESSING INFORMATION A
(READ:" ON/OFF SETTING" :SET ON)

LOWER LAYER PROCESSING INFORMATION B
(READ:" AIR CONDITIONER SETTING" :SET TEMPERATURE AND AIR VOLUME)

PERFORM
PROCESS A
S420

S430   RESPONSE A (READ:" ON/OFF SETTING" )

PERFORM
PROCESS B
S440

TIMEOUT PERIOD t4

S450   RESPONSE B (READ:" AIR CONDITIONER SETTING" )

EP 2 787 713 A1

**INTERNATIONAL SEARCH REPORT**

International application No.

PCT/JP2012/080656

**A. CLASSIFICATION OF SUBJECT MATTER**
*H04L29/10(2006.01)i, H04L1/00(2006.01)i*

According to International Patent Classification (IPC) or to both national classification and IPC

**B. FIELDS SEARCHED**

Minimum documentation searched (classification system followed by classification symbols)
H04L29/10, H04L1/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-308155 A (Tokyo Gas Co., Ltd.), 02 November 2000 (02.11.2000), paragraphs [0013] to [0015] (Family: none) | 1-10 |
| Y | JP 2009-171193 A (Kyocera Mita Corp.), 30 July 2009 (30.07.2009), paragraphs [0001], [0016] to [0018] (Family: none) | 1-10 |
| Y | JP 2011-120324 A (Kyocera Corp.), 16 June 2011 (16.06.2011), paragraphs [0023] to [0030] & EP 2508897 A          & WO 2011/065497 A1 & CN 102597788 A | 1-10 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 January, 2013 (09.01.13) | 22 January, 2013 (22.01.13) |

| Name and mailing address of the ISA/ Japanese Patent Office | Authorized officer |
|---|---|
| Facsimile No. | Telephone No. |

Form PCT/ISA/210 (second sheet) (July 2009)

# EP 2 787 713 A1

**INTERNATIONAL SEARCH REPORT**

| International application No. |
| --- |
| PCT/JP2012/080656 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2010-130324 A  (Sharp Corp.),<br>10 June 2010 (10.06.2010),<br>abstract<br>(Family: none) | 6 |
| Y | JP 2010-271897 A  (Toshiba Toko Meter Systems Co., Ltd.),<br>02 December 2010 (02.12.2010),<br>paragraphs [0036], [0037]<br>(Family: none) | 7 |
| A | JP 2001-36649 A  (Osaka Gas Co., Ltd.),<br>09 February 2001 (09.02.2001),<br>entire text; all drawings<br>(Family: none) | 1-10 |
| A | JP 2009-282627 A  (Fuji Electric Systems Co., Ltd.),<br>03 December 2009 (03.12.2009),<br>entire text; all drawings<br>(Family: none) | 1-10 |
| A | JP 2011-129085 A  (Electronics and Telecommunications Research Institute),<br>30 June 2011 (30.06.2011),<br>entire text; all drawings<br>& US 2011/0153107 A1    & KR 10-2011-0070654 A | 1-10 |

Form PCT/ISA/210 (continuation of second sheet) (July 2009)

19

## REFERENCES CITED IN THE DESCRIPTION

**Patent documents cited in the description**

- JP 2011129085 A
- JP 2011259607 A